# EUROPÄISCHE PATENTSCHRIFT

(11) **EP 3 888 969 B1**
(45) Veröffentlichungstag und Bekanntmachung des Hinweises auf die Patenterteilung: **30.08.2023**
(21) Anmeldenummer: 21163393.8
(22) Anmeldetag: 18.03.2021
(51) Int. Cl.: B60L 53/10, H02J 7/00

(54) **MEHRFACHLADEEINRICHTUNG ZUM LADEN MEHRERER BATTERIEN**
MULTIPLE CHARGING DEVICE FOR CHARGING MULTIPLE BATTERIES
DISPOSITIF DE CHARGE MULTIPLE PERMETTANT DE CHARGER PLUSIEURS BATTERIES

(30) Priorität: 02.04.2020 DE 102020109212
(43) Veröffentlichungstag der Anmeldung: 06.10.2021
(73) Patentinhaber: STILL GmbH, 22113 Hamburg (DE)
(72) Erfinder: HOFFMANN, Ekkehard, 21037 Hamburg (DE)
(74) Vertreter: Patentship Patentanwaltgesellschaft

(56) Entgegenhaltungen:
- WO-A1-2019/020600
- DE-A1-102018 117 157

## Beschreibung

Die Erfindung betrifft eine Mehrfachladeeinrichtung zum Laden mehrerer Batterien, insbesondere mehrerer Traktionsbatterien von Flurförderzeugen, wobei die Mehrfachladeeinrichtung über weniger AC/DC-Wandler als DC/DC-Wandler verfügt und wobei der oder die AC/DC-Wandler räumlich getrennt von zumindest einem Teil der DC/DC-Wandler angeordnet ist und wobei der oder die AC/DC-Wandler an einem Stromnetz-Anschluss angeschlossen ist und die DC/DC-Wandler mit Batterie-Lade-Anschlüssen verbunden sind.

Der Begriff Batterie umfasst im Rahmen der vorliegenden Erfindung wiederaufladbare Batterien, die im strengeren Sinn als Akkumulatoren bezeichnet werden. Insbesondere im Zusammenhang mit elektrischen Antrieben, besonders im Zusammenhang mit batterie-elektrisch angetriebenen Flurförderzeugen, hat sich allerdings auch hierfür der Begriff Batterie bzw. Traktionsbatterie eingebürgert, so dass er im Folgenden verwendet wird.

Bei Flurförderzeugen ist es üblich und Stand der Technik, dass Traktionsbatterien entweder bei einem Mehrschichtbetrieb zum Laden aus einem Batteriefach entnommen und gegen eine aufgeladene Traktionsbatterie ausgewechselt werden, oder der Fahrer gegen Ende seiner Arbeitsschicht ein Ladegerät über eine Steckerverbindung mit der Traktionsbatterie verbindet, um diese während der Arbeitspause aufzuladen. Typischerweise erfolgt dies pro Arbeitsschicht einmal, da eine Traktionsbatterie eines batterieelektrischen Flurförderzeugs im Regelfall so bemessen wird, dass mit einer Ladung der Traktionsbatterie eine komplette Arbeitsschicht gefahren und gearbeitet werden kann.

Werden mehrere Flurförderzeuge in einem Fuhrpark eingesetzt, ist es wünschenswert, mehrere Batterien gleichzeitig laden zu können. Hierfür können Mehrfachladegeräte oder mehrere, insbesondere über eine Schnittstelle miteinander kommunizierende, Einzelladegeräte vorgesehen sein, die üblicherweise an einer gemeinsamen Netzinstallation angeschlossen sind. In den Ladegeräten sind Stromrichter, insbesondere Gleichrichter (AC/DC-Wandler) zum Umwandeln des Wechselstroms des Stromnetzes in Gleichstrom und Gleichspannungswandler (DC/DC-Wandler) zum Umwandeln einer Gleichspannung in eine höhere oder niedrigere Gleichspannung, verbaut.

Üblicherweise sind für das Laden von mehreren Batterien so viele AC/DC-Wandler und DC/DC-Wandler vorgesehen, dass jeder Batterie ein eigener AC/DC-Wandler und DC/DC-Wandler zugeordnet werden kann. Dies erfordert hohe Kosten und einen großen Bauraum.

Aus der WO 2019/020 600 A1 ist eine gattungsgemäßes Mehrfachladeeinrichtung mit den Merkmalen des Oberbegriffs des Patentanspruchs 1 bekannt.

Die DE 10 2018 117 157 A1 offenbart eine Batterieladeeinrichtung für Flurförderzeuge.

Der vorliegenden Erfindung liegt die Aufgabe zugrunde, eine Mehrfachladeeinrichtung zur Verfügung zu stellen, die auch bei Auslegung für eine Vielzahl von zu ladenden Batterien noch kostengünstig ist.

Diese Aufgabe wird erfindungsgemäß dadurch gelöst, dass Stromleitungen vorgesehen sind, über die jeweils die räumlich getrennten AC/DC-Wandler und DC/DC-Wandler miteinander verbunden sind.

Das erfindungsgemäße Konzept sieht also vor, dass mehrere DC/DC-Wandler an mindestens einen gemeinsamen AC/DC-Wandler angeschlossen sind. Somit ist nicht mehr für jede zu ladende Batterie ein eigener AC/DC-Wandler erforderlich. Da sich also mehrere DC/DC-Wandler einen AC/DC-Wandler teilen, kann die Zahl der insgesamt verbauten AC/DC-Wandler reduziert werden. Dadurch können insbesondere bei einer Vielzahl von gleichzeitig zu ladendenden Batterien die Kosten der Mehrfachladeeinrichtung deutlich reduziert werden.

Gemäß der Erfindung sind der oder die AC/DC-Wandler räumlich getrennt von zumindest einem Teil der DC/DC-Wandler angeordnet und die räumlich getrennten AC/DC-Wandler und DC/DC-Wandler über Stromleitungen miteinander verbunden, wobei der oder die AC/DC-Wandler an einem Stromnetz-Anschluss angeschlossen ist und die DC/DC-Wandler mit Batterie-Lade-Anschlüssen verbunden sind.

Der am Stromnetz-Anschluss angeschlossene AC/DC-Wandler sorgt also für die Umwandlung des Wechselstroms des Stromnetzes in Gleichstrom und stellt diesen den einzelnen DC/DC-Wandlern zur Verfügung. Dabei kann sich zumindest ein Teil der DC/DC-Wandler in einer größeren Entfernung vom Stromnetz-Anschluss befinden und über Stromleitungen vom AC/DC-Wandler versorgt werden, so dass eine flexible Anpassung an die räumlichen Verhältnisse einer Ladeinfrastruktur, insbesondere beim Laden mehrerer Traktionsbatterien von Flurförderzeugen, ermöglicht wird.

Eine bevorzugte Ausgestaltung der Erfindung sieht vor, dass die Mehrfachladeeinrichtung über einen AC/DC-Wandler und mindestens zwei DC/DC-Wandler verfügt. In dieser Ausgestaltung teilen sich also alle DC/DC-Wandler einen gemeinsamen AC/DC-Wandler. Dabei kann zum Laden mehrerer Batterien jeder Batterie ein eigener DC/DC-Wandler zugeordnet werden.

Zweckmäßigerweise sind der oder die AC/DC-Wandler einerseits und zumindest ein Teil der DC/DC-Wandler andererseits in separaten Gehäusen untergebracht.

Bevorzugt sind höchstens jeweils zwei DC/DC-Wandler in gemeinsamen Gehäusen untergebracht. Somit können jeweils zwei Batterien an ein gemeinsames Gehäuse angeschlossen werden. Dies ist hinsichtlich einer günstigen Raumaufteilung insbesondere beim Laden von großen Batterien, wie beispielsweise Traktionsbatterien von Flurförderzeugen, von Vorteil.

Gemäß einer besonders vorteilhaften Weiterbildung des Erfindungsgedankens umfasst die Mehrfachladeeinrichtung eine Steuerungseinrichtung, die dazu eingerichtet ist, einen Ladevorgang zum Laden einer Reihenfolge von mindestens zwei an die Mehrfachladeeinrichtung angeschlossenen Batterien so zu steuern, dass mit einem Ladevorgang einer nachfolgenden Batterie bereits vor Beendigung eines vorher begonnenen Ladevorgangs mindestens einer vorherigen Batterie begonnen wird, sobald ein vorgegebener Grenzwert der Ladeleistung des vorher begonnenen Ladevorgangs unterschritten wird.

Diese Steuerungseinrichtung ermöglicht es, dass die Leistung aller DC/DC-Wandler die Leistung des AC/DC-Wandlers oder der AC/DC-Wandler übersteigt. Durch die von der Steuerungseinrichtung gesteuerte Ladestrategie wird auch in diesem Fall eine Überlastung des AC/DC-Wandlers oder der AC/DC-Wandler zuverlässig verhindert.

Mit der Steuerungseinrichtung wird eine Ladestrategie ermöglicht, welche die Leistung der Netzinstallation und/oder die Leistung des AC/DC-Wandlers besser ausnutzt und so die Ladedauer reduziert. Dies wird dadurch erreicht, dass mit dem Laden einer nachfolgenden Batterie nicht auf das Ende eines vorher begonnenen Ladevorgangs einer vorherigen Batterie gewartet wird, sondern der neue Ladevorgang bereits gestartet wird, wenn ein bestimmter Grenzwert der Ladeleistung des vorher begonnenen Ladevorgangs unterschritten wurde.

Die Erfindung eignet sich für das Laden beliebiger Batterien. Mit besonderem Vorteil kann die erfindungsgemäße Mehrfachladeeinrichtung zum Laden von Traktionsbatterien von Flurförderzeugen verwendet werden. Aufgrund der Größe dieser Traktionsbatterien ist die Möglichkeit einer räumlich flexiblen Anordnung von Teilen der Mehrfachladeeinrichtung mit räumlich getrennten AC/DC-Wandlern und DC/DC-Wandlern besonders vorteilhaft. Dies trifft in besonderem Maße beim Laden von großen und schweren Blei-Säure-Batterien zu.

Dabei kann die erfindungsgemäße Mehrfachladeeinrichtung zum Laden aller Arten von Batterien, insbesondere von Blei-Säure-Batterien und Lithium-Ionen-Batterien, verwendet werden.

Weitere Vorteile und Einzelheiten der Erfindung werden anhand der in den schematischen Figuren dargestellten Ausführungsbeispiele näher erläutert. Hierbei zeigt die
- Figur: eine Mehrfachladeeinrichtung nach der Erfindung mit mehreren angeschlossenen Batterien.

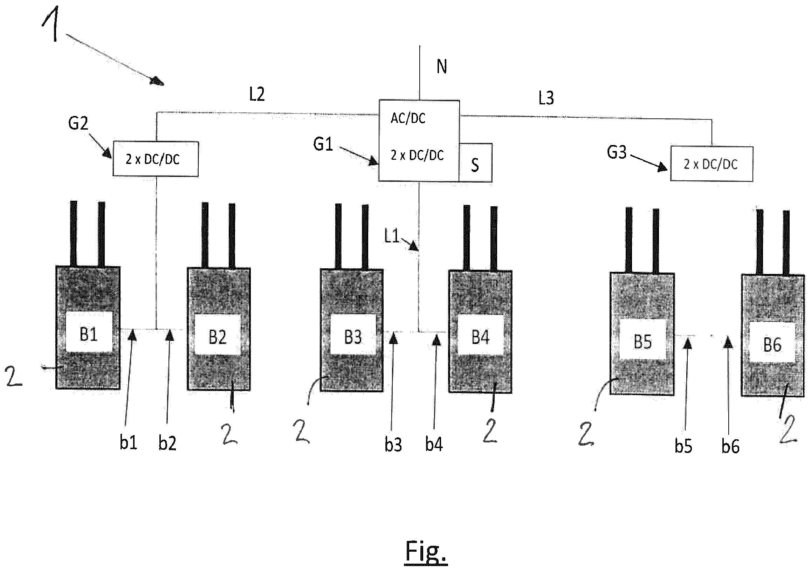

In der Figur ist eine Mehrfachladeeinrichtung 1 dargestellt, die als Mehrfachladegerät ausgebildet ist und an die mehrere, im dargestellten Ausführungsbeispiel sechs Batterien B1, B2, B3, B4, B5 und B6 angeschlossen sind und geladen werden können. Dabei kann es sich insbesondere um Blei-Säure-Batterien handeln, die als Traktionsbatterien bei Flurförderzeugen 2 eingesetzt werden.

Die Mehrfachladeeinrichtung 1 ist an einem Stromnetz-Anschluss N angeschlossen, der zum Beispiel für eine Spannung von 400 Volt und eine Stromstärke von 63 Ampere ausgelegt ist. Unmittelbar in Nähe des Stromnetz-Anschlusses N ist ein Gehäuse G1 der Mehrfachladeeinrichtung 1 angeordnet, in dem ein AC/DC-Wandler sowie zwei DC/DC-Wandler untergebracht sind. Die beiden DC/DC-Wandler des Gehäuses G1 sind über eine Stromleitung L1 und Batterie-Lade-Anschlüsse b3 und b4 an die Batterien B3 und B4 angeschlossen und versorgen diese mit Ladestrom.

Außerdem sind über Stromleitungen L2 und L3 weitere Gehäuse G2 und G3 an das Gehäuse G1 angeschlossen. In den Gehäusen G2 und G3 sind jeweils zwei DC/DC-Wandler untergebracht. Die DC/DC-Wandler des Gehäuses G2 versorgen die Batterien B1 und B2 mit Ladestrom, während die DC/DC-Wandler des Gehäuses G3 die Batterien B5 und B6 mit Ladestrom versorgen. Hierzu sind die DC/DC-Wandler jeweils über Batterie-Lade-Anschlüsse b1 und b2 sowie b5 und b6 an die Batterien B1 und B2 sowie B5 und B6 angeschlossen.

Der AC/DC-Wandler im Gehäuse G1 wandelt die Wechselstrom-Netzspannung des Stromnetz-Anschlusses N von 400 Volt in eine Gleichstrom-Hochspannung von beispielsweise 600 Volt um. Die DC/DC-Wandler in den Gehäusen G1, G2 und G3 wandeln die Gleichstrom-Hochspannung von 600 Volt in eine zum Laden der Batterien B1 bis B6 geeignete Gleichstrom-Niederspannung von beispielsweise 48 Volt um. Die DC/DC-Wandler in den Gehäusen G1, G2 und G3 können hierbei jeweils dieselbe Gleichstrom-Niederspannung erzeugen. Alternativ können die DC/DC-Wandler in den Gehäusen G1, G2 und G3 verschiedene Gleichstrom-Niederspannungen erzeugen, beispielsweise ein Teil der DC/DC-Wandler eine Gleichstrom-Niederspannung von 24 Volt, ein Teil der DC/DC-Wandler eine Gleichstrom-Niederspannung von 48 Volt und ein Teil der DC/DC-Wandler eine Gleichstrom-Niederspannung von 80 Volt.

Die erfindungsgemäße Mehrfachladeeinrichtung kommt mit einem einzigen AC/DC-Wandler im Gehäuse G1 aus, um sechs Batterien B1 bis B6 gleichzeitig zu laden.

Zur Steuerung der geeigneten Lade-Strategie ist am Gehäuse G1 zusätzlich eine Steuerungseinrichtung S vorgesehen.

## Patentansprüche

1. Mehrfachladeeinrichtung (1) zum Laden mehrerer Batterien (B1, B2, B3, B4, B5, B6), insbesondere mehrerer Traktionsbatterien (B1, B2, B3, B4, B5, B6) von Flurförderzeugen (2), wobei die Mehrfachladeeinrichtung (1) über weniger AC/DC-Wandler als DC/DC-Wandler verfügt und wobei der oder die AC/DC-Wandler räumlich getrennt von zumindest einem Teil der DC/DC-Wandler angeordnet ist und wobei der oder die AC/DC-Wandler an einem Stromnetz-Anschluss (N) angeschlossen ist und die DC/DC-Wandler mit Batterie-Lade-Anschlüssen (b1, b2, b3, b4, b5, b6) verbunden sind, **dadurch gekennzeichnet, dass** Stromleitungen (L2, L3) vorgesehen sind, über die jeweils die räumlich getrennten AC/DC-Wandler und DC/DC-Wandler miteinander verbunden sind.

2. Mehrfachladeeinrichtung (1) nach Anspruch 1, **dadurch gekennzeichnet, dass** die Mehrfachladeeinrichtung (1) über einen AC/DC-Wandler und mindestens zwei DC/DC-Wandler verfügt.

3. Mehrfachladeeinrichtung (1) nach Anspruch 1 oder 2, **dadurch gekennzeichnet, dass** der oder die AC/DC-Wandler einerseits und zumindest ein Teil der DC/DC-Wandler andererseits in separaten Gehäusen (G1, G2, G3) untergebracht sind.

4. Mehrfachladeeinrichtung (1) nach einem der Ansprüche 1 bis 3, **dadurch gekennzeichnet, dass** höchstens jeweils zwei DC/DC-Wandler in gemeinsamen Gehäusen (G1, G2, G3) untergebracht sind.

5. Mehrfachladeeinrichtung (1) nach einem der Ansprüche 1 bis 3, **dadurch gekennzeichnet, dass** die Mehrfachladeeinrichtung (1) eine Steuerungseinrichtung (S) umfasst, die dazu eingerichtet ist, einen Ladevorgang zum Laden einer Reihenfolge von mindestens zwei an die Mehrfachladeeinrichtung (1) angeschlossenen Batterien (B1, B2, B3, B4, B5, B6) so zu steuern, dass mit einem Ladevorgang einer nachfolgenden Batterie (B1, B2, B3, B4, B5, B6) bereits vor Beendigung eines vorher begonnenen Ladevorgangs mindestens einer vorherigen Batterie (B1, B2, B3, B4, B5, B6) begonnen wird, sobald ein vorgegebener Grenzwert der Ladeleistung des vorher begonnenen Ladevorgangs unterschritten wird.

## Claims

1. Multiple charging device (1) for charging a plurality of batteries (B1, B2, B3, B4, B5, B6), in particular a plurality of traction batteries (B1, B2, B3, B4, B5, B6) of industrial trucks (2), wherein the multiple charging device (1) has fewer AC/DC converters than DC/DC converters, and wherein the AC/DC converter or converters is/are arranged so as to be spatially separated from at least some of the DC/DC converters, and wherein the AC/DC converter or converters is/are connected to a power grid connection (N) and the DC/DC converters are connected to battery charging connections (b1, b2, b3, b4, b5, b6), **characterized in that** power lines (L2, L3) are provided, via which in each case the spatially separated AC/DC converters and DC/DC converters are connected to one another.

2. Multiple charging device (1) according to Claim 1, **characterized in that** the multiple charging device (1) has an AC/DC converter and at least two DC/DC converters.

3. Multiple charging device (1) according to Claim 1 or 2, **characterized in that** the AC/DC converter or converters, on the one hand, and at least some of the DC/DC converters, on the other hand, are accommodated in separate housings (G1, G2, G3).

4. Multiple charging device (1) according to one of Claims 1 to 3, **characterized in that** a maximum of in each case two DC/DC converters are accommodated in common housings (G1, G2, G3).

5. Multiple charging device (1) according to one of Claims 1 to 3, **characterized in that** the multiple charging device (1) comprises a control device (S) that is designed to control a charging operation for charging a sequence of at least two batteries (B1, B2, B3, B4, B5, B6) that are connected to the multiple charging device (1) in such a way that a charging operation of a subsequent battery (B1, B2, B3, B4, B5, B6) is started before the end of a previously started charging operation of at least one previous battery (B1, B2, B3, B4, B5, B6) as soon as a predefined limit value of the charging power of the previously started charging operation is fallen below.

## Revendications

1. Dispositif de charge multiple (1) permettant de charger plusieurs batteries (B1, B2, B3, B4, B5, B6), en particulier plusieurs batteries de traction (B1, B2, B3, B4, B5, B6) de chariots de manutention (2), dans lequel le dispositif de charge multiple (1) dispose de moins de convertisseurs AC/DC que de convertisseurs CC/CC, et dans lequel le(s) convertisseur(s) CA/CC est/sont disposé(s) de manière physiquement séparée d'au moins une partie des convertisseurs CC/CC, et dans lequel le(s) convertisseur(s) CA/CC est/sont connecté(s) à une borne de réseau électrique (N) et les convertisseurs CC/CC sont reliés à des bornes de charge de batterie (b1, b2, b3, b4, b5, b6),
**caractérisé en ce que** des lignes électriques (L2, L3) sont prévues par lesquelles les convertisseurs CA/CC et les convertisseurs CC/CC physiquement séparés sont reliés les uns aux autres respectivement.

2. Dispositif de charge multiple (1) selon la revendication 1, **caractérisé en ce que** le dispositif de charge multiple (1) dispose d'un convertisseur CA/CC et d'au moins deux convertisseurs CC/CC.

3. Dispositif de charge multiple (1) selon la revendication 1 ou 2, **caractérisé en ce que** le(s) convertisseur(s) CA/CC d'une part, et au moins une partie des convertisseurs CC/CC d'autre part, sont logés dans des boîtiers séparés (G1, G2, G3).

4. Dispositif de charge multiple (1) selon l'une quelconque des revendications 1 à 3, **caractérisé en ce que** respectivement deux convertisseurs CC/CC au maximum sont logés dans des boîtiers communs (G1, G2, G3).

5. Dispositif de charge multiple (1) selon l'une quelconque des revendications 1 à 3, **caractérisé en ce que** le dispositif de charge multiple (1) comprend un dispositif de commande (S) qui est conçu pour commander un processus de charge pour charger une série d'au moins deux batteries (B1, B2, B3, B4, B5, B6) connectées au dispositif de charge multiple (1) de telle sorte qu'un processus de charge d'une batterie suivante (B1, B2, B3, B4, B5, B6) commence avant même la fin d'un processus de charge commencé précédemment d'au moins une batterie précédente (B1, B2, B3, B4, B5, B6) dès qu'une valeur limite prédéfinie de la puissance de charge du processus de charge commencé précédemment est soupassée.
